# EUROPEAN PATENT SPECIFICATION

(11) **EP 3 805 138 B1**
(45) Date of publication and mention of the grant of the patent: **06.04.2022**
(21) Application number: 19734125.8
(22) Date of filing: 17.05.2019
(51) Int. Cl.: B66B 5/04, F16D 59/00

(54) **DETACHABLE CENTRIFUGAL BRAKE FOR LIFT EQUIPMENT**
LÖSBARE FLIEHKRAFTBREMSE FÜR EIN HEBESYSTEM
FREIN CENTRIFUGE DÉSACCOUPLABLE POUR ÉQUIPEMENT ÉLÉVATEUR

(30) Priority: 08.06.2018 ES 201830559
(43) Date of publication of application: 14.04.2021
(73) Proprietor: Embragatges I Derivats, S.A., 08211 Castellar del Valles (ES)
(72) Inventor: ROMEU ARGEMI, Enric, 08211 CASTELLAR DEL VALLES (ES); SAUMELL MESTRE, Sergi, 08211 CASTELLAR DEL VALLES (ES)
(74) Representative: Isern Patentes y Marcas S.L.
(86) International application number: PCT/ES2019/070329
(87) International publication number: WO 2019/234267

(56) References cited:
- EP-A2- 0 628 510
- EP-B1- 0 628 510
- EP-B1- 1 576 713
- DE-A1- 2 818 600
- DE-A1- 2 919 644
- DE-A1-102004 023 123
- DE-C2- 2 919 644
- US-A- 4 282 953
- US-A- 4 531 617

## Description

### OBJECT OF THE INVENTION

The object of the present application is the registration of a detachable centrifugal brake for lift equipment.

More specifically, the invention proposes the development of a detachable centrifugal brake for lift equipment, such that it can adopt a position wherein the brake means present in the centrifugal brake act and a second position wherein the brake means are deactivated.

### BACKGROUND OF THE INVENTION

At present, the application of centrifugal brake systems in lifts is well known. Said systems are mounted between a motor and a reducer, calibrated such that they only act when the speed exceeds the normal working rate in order to prevent the lift from free falling.

The operation is carried out in the following way: the centrifugal forces move masses which, when creating friction on a static inner drum, generate a braking torque. The speed of descent is the result of the balance between the descending power and the braking power, there being an exponential growth of the torque created by the brake in relation to the speed.

Furthermore, parachute devices installed in lifts, which are provided to lock the movement of the lift in case of free fall, are also known. This is known, for example, in document No. ES 1057310U wherein a centrifugal brake is described, the common technical elements of which make up part of the preamble of claim 1.

Document No. ES 2348900 is also known which describes a centrifugal safety device, for lifts and similar equipment. However, due to the structural configuration thereof it does not allow the brake to be overridden in a simplified manner in order to inspect a second safety brake calibrated to higher falling speeds.

However, in the case where a lift includes the two aforementioned safety systems, i.e. a centrifugal brake and a parachute device, when maintenance tasks and/or tests related to the operation of the parachute are to be carried out, it entails the partial or total disassembly of the centrifugal brake in order to cancel the operations thereof, which entails increased time in the tasks before and after performing a test.

Also, it is known DE 2919644 A1 which discloses a centrifugal clutch for road roller which has friction bodies guided radially on a shatf so as topress against a bell housing, and retracted by springs.

Furthermore, the applicant does not currently know of an invention that has all the features described in this specification.

### DESCRIPTION OF THE INVENTION

The present invention has been developed with the aim of providing a centrifugal brake which is configured as a novelty within the field of application and solves the previously mentioned drawbacks, also contributing other additional advantages that will be obvious from the description below.

It is therefore an object of the present invention to provide a detachable centrifugal brake for lift equipment, being of the type comprising a central core linked to a rotation shaft attached to motor means, an inner drum having a contact surface provided to come into contact with brake elements which act due to the effects of centrifugal force.

More particularly, the invention is characterised in that it includes releasable coupling means for locking/unlocking the inner drum with respect to a stationary portion which externally encompasses the inner drum, such that in a first operating position the inner drum is integrally coupled to the outer drum while in a second operating position the inner drum is free to rotate on its own shaft by means of the arrangement of rotation means, wherein the coupling means include actuation means acting on the coupling means. Futhermore, the actuation means comprises a pin adjustable in position including a toothed section able to be coupled in a releasable manner with the toothed region of the inner drum, the pin being housed in a housing present in the outer drum, and wherein the pin comprises two recesses present along the length thereof, being configured to couple an additional pin, wherein each of the recesses corresponds to a corresponding operating position.

Due to these features, a centrifugal brake is obtained which is able to lock the operation thereof in a simple and fast way as needed, without having to disassemble it. This brake is particularly useful in the event that a lift has a centrifugal brake and a parachute device. In this way, when it is desirable to lock the operation of the centrifugal brake, the inner drum rotates freely, for which reason the brake elements (masses) which would come into contact with a surface of the inner drum in the case of normal operation, do not exert the braking action as there is no friction between both moving portions.

This brake offers a simple constructive solution which in turn facilitates the assembly of the brake and the manufacturing costs thereof.

Preferably, the aforesaid rotation means comprise at least one bearing, for example a ball bearing, which is arranged between the central core and the inner drum, which facilitates the sliding of the inner drum when the centrifugal brake is in a non-operating condition.

According to another aspect of the invention, the coupling means may comprise a retention system for locking the inner drum, said retention system being able to be actuated due to the effects of the actuation means.

Preferably, the retention system has a toothed region arranged along the entire perimeter length of the inner drum wherein a toothed section connected to the actuation means is able to be coupled.

Preferably, the pin which can be handled manually by a user, adjustable in position including a toothed section that can be engaged with the toothed region of the inner drum, the pin being housed in a housing present in the brake-carrying disc.

Additionally, the actuation means comprise elastic return means located inside the housing, which facilitate and soften the movement of the pin when it is being handled.

Additionally, the actuation means comprise an additional pin present in a second housing made in the brake-carrying disc, being insertable into one of the recesses made in the pin. This additional pin acts as a safety system which prevents the unintentional activation of the pin.

Preferably, the additional pin is arranged perpendicularly with respect to a longitudinal axis of the pin.

Advantageously, elastic return means acting on the additional pin are also included, facilitating and softening the movement of the additional pin during the use thereof.

Other features and advantages of the centrifugal brake object of the present invention will be evident in light of the description of a preferred, but not exclusive, embodiment which is illustrated by way of non-limiting example in the drawings which are attached, wherein:

### BRIEF DESCRIPTION OF THE DRAWINGS

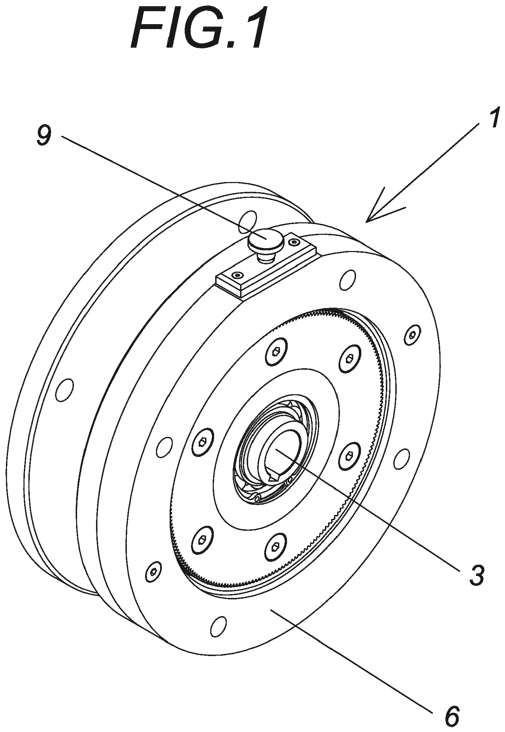

Figure 1.- Is a perspective view of a detachable centrifugal brake according to the present invention, intended to be mounted in lift equipment;

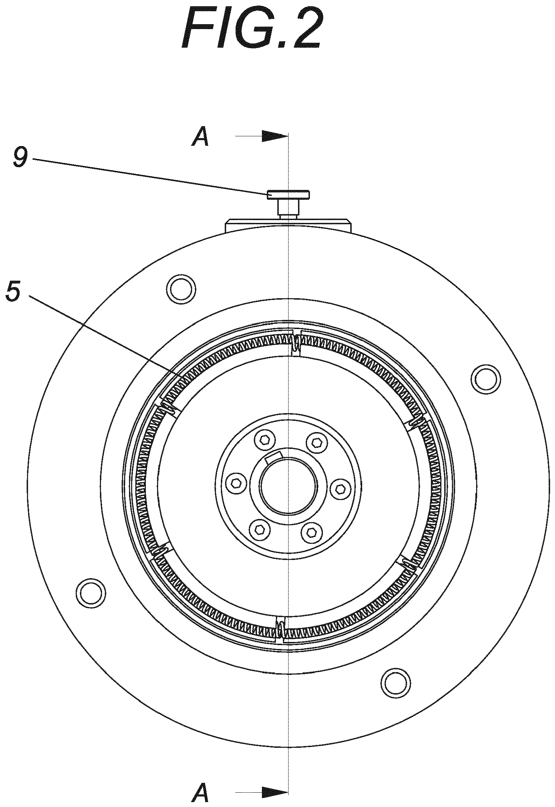

Figure 2.- Is a front elevation view of the centrifugal brake shown in figure 1;
Figure 3.- Is a cross-sectional perspective view of the centrifugal brake along the line A-A indicated in figure 2;
Figure 4 is a transverse cross-sectional view of the centrifugal brake corresponding to a position wherein the inner drum is locked; and
Figure 5.- Is a transverse cross-sectional view of the centrifugal brake corresponding to a position wherein the inner drum is unlocked, meaning, it can rotate freely.

### DESCRIPTION OF A PREFERRED EMBODIMENT

In light of the aforementioned figures, and in accordance with the adopted numbering, one may observe therein an example of a preferred embodiment of the invention, which comprises the parts and elements indicated and described in detail below.

As shown in the present embodiment, a detachable centrifugal brake, generally indicated with the reference (1), is provided to be mounted in lift equipment (not shown). This centrifugal brake (1) comprises a central core (2) having a central housing (3) foreseen to couple a rotation shaft (not shown) attached to motor means, an inner drum (4) arranged around the central core (2) having a contact surface (20) provided to come into contact with brake elements (5) (masses). These two brake elements (5) are spaced apart from each other, being present along the perimeter edge in the central core (2) acting due to the effects of centrifugal force during the actuation of the centrifugal brake (1).

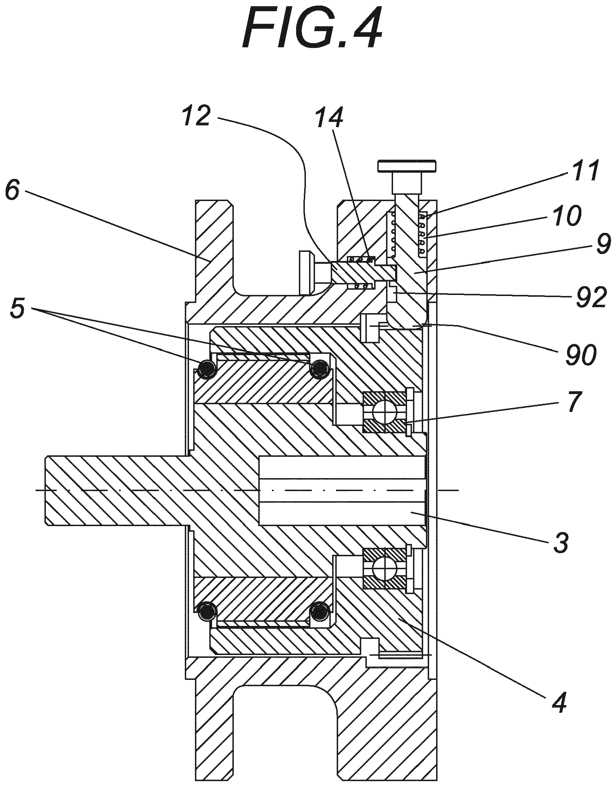

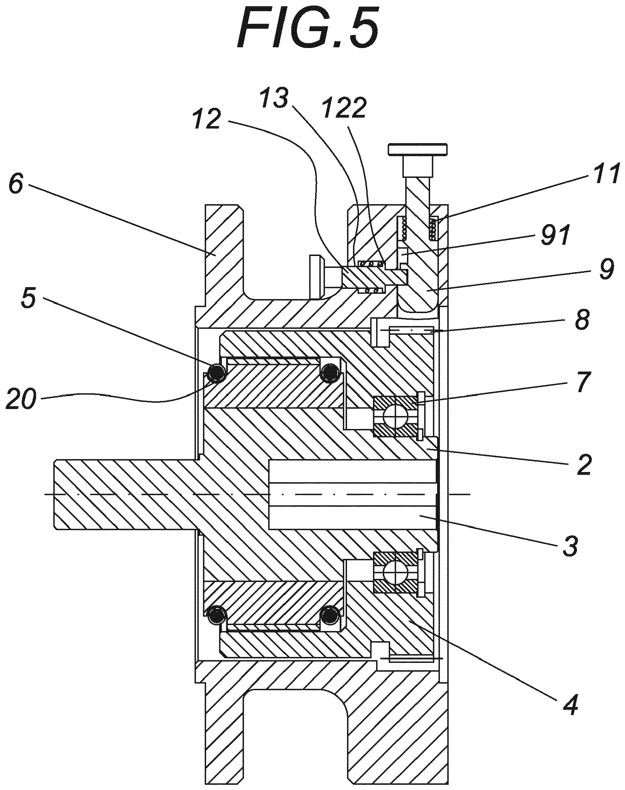

In order to lock/unlock the inner drum (4) with respect to an outer drum (6) externally encompassing the inner drum (4), releasable coupling means are provided, such that in a first operating position (see figure 4) the inner drum is integrally coupled to the outer drum (6) while in a second operating position (see figure 5) the inner drum is free to rotate on its own shaft by means of the arrangement of rotation means. The coupling means include actuation means which act on the coupling means.

To facilitate the rotating action of the inner drum (4) during the position wherein such inner drum (4) is unlocked, a ball bearing (7) is provided which is arranged in a housing located between the central core (2) and the inner drum (4).

Regarding the coupling means, they comprise a retention system for locking the inner drum (4), said retention system being able to be actuated due to the effects of the actuation means that will be detailed later.

This retention system has in particular a toothed region (8), arranged along the entire perimeter length of the inner drum (4) wherein a toothed section linked to the actuation means is able to be coupled.

Now, regarding the actuation means, they comprise a pin (9) that can be adjusted in position, which includes a toothed section (90) at one of the ends thereof, dimensionally configured to be coupled to the toothed region integrally secured to the inner drum (4), the pin (9) being housed in a housing (10) present in the outer drum (6). Additionally, elastic return means are provided which consist of an elastic spring (11) which is located inside the housing (10), which act on the pin (9).

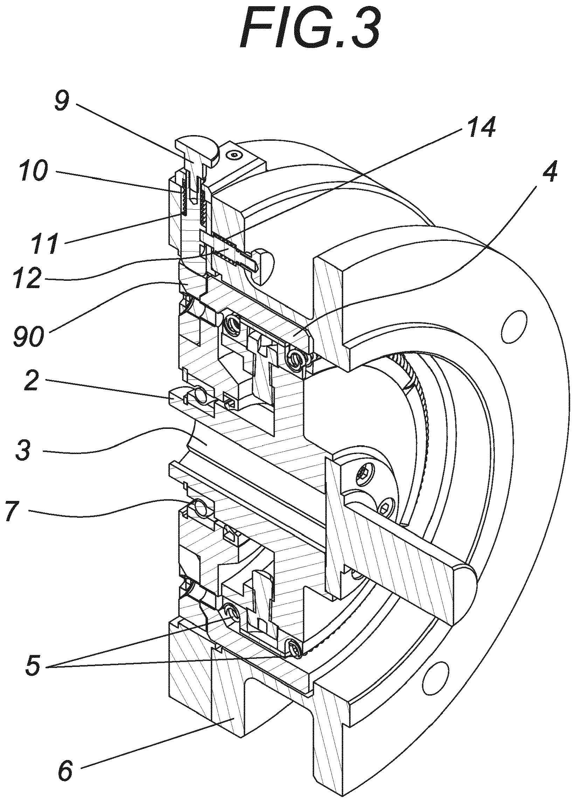

As seen more clearly in figures 3 to 5, the pin comprises two recesses (91, 92) present along the length thereof, being configured to couple an additional pin (12). Such two recesses (91, 92) determine the locking or unlocking position of the inner drum (4) with respect to the outer drum (6).

Furthermore, the actuation means comprise an additional pin (12) present in a second housing (13) made in the outer drum (6), being insertable into one of the recesses (91, 92) made in the pin (9). In this manner, in order to move the pin (9), the additional pin (12) must be moved outwards beforehand.

In figure 4, the inner drum is in a locked position, such that the additional pin (12) is coupled in the recess (91). On the contrary, in figure 5, the inner drum is in an unlocked position, meaning, it can rotate freely, such that the additional pin (12) is coupled in the recess (92).

As seen, the additional pin (12) is arranged perpendicularly with respect to a longitudinal axis of the pin (9), including elastic return means consisting of a helical spring (14) arranged around a section of the additional pin (12) and located in a housing located in the outer drum (6). The helical spring (14) is abutting on one end with the wall of the housing while the opposite end is in contact with a projection (122) jutting out of the perimeter of the additional pin (12).

The details, shapes, dimensions and other accessory elements, used to manufacture the detachable centrifugal brake of the invention, may be suitably substituted for others which do not depart from the scope defined by the claims which are included below.

## Claims

1. A detachable centrifugal brake (1) for lift equipment, comprising a central core (2) linked to a rotation shaft attached to motor means, an inner drum (4) having a contact surface provided to come into contact with brake elements which act due to the effects of centrifugal force, including releasable coupling means for locking/unlocking the inner drum (4) with respect to a stationary portion externally encompassing the inner drum (4), such that in a first operating position the inner drum (4) is integrally coupled to an outer drum (6) while in a second operating position the inner drum (4) is free to rotate on its own shaft by means of the arrangement of rotation means, wherein the coupling means include actuation means which act on the coupling means, the coupling means comprising a retention system for locking the inner drum (4), such retention system being able to be actuated due to the effects of the actuation means, the retention system having a toothed region (8) linked to the inner drum (4) wherein a toothed section (90) linked to the actuation means is able to be coupled, **characterised in that** the actuation means comprises a pin (9) adjustable in position including a toothed section (90) able to be coupled in a releasable manner with the toothed region (8) of the inner drum (4), the pin (9) being housed in a housing present in the outer drum (6), and wherein the pin comprises two recesses present along the length thereof, being configured to couple an additional pin (12), wherein each of the recesses corresponds to a corresponding operating position.

2. The centrifugal brake (1) according to claim 1, **characterised in that** the rotation means comprise at least one bearing (7) which is arranged between the central core (2) and the inner drum (4).

3. The centrifugal brake (1) according to claim 1, **characterised in that** the toothed region (8) is arranged along the entire perimeter length of the inner drum (4).

4. The centrifugal brake (1) according to claim 1, **characterised in that** the actuation means comprise elastic return means located inside the housing, which act on the pin (9).

5. The centrifugal brake (1) according to claim 1, **characterised in that** the actuation means comprise an additional pin (12) present in a second housing made in the outer drum (6), being insertable into one of the recesses made in the pin.

6. The centrifugal brake (1) according to claim 5, **characterised in that** the additional pin (12) is arranged perpendicularly with respect to a longitudinal axis of the pin (9).

7. The centrifugal brake (1) according to claim 5, **characterised in that** elastic return means are included which act on the additional pin (12).

## Patentansprüche

1. Abnehmbare Zentrifugalbremse (1) für eine Aufzugsanlage, umfassend einen zentralen Kern (2), der mit einer Rotationswelle verbunden ist, die an Motormitteln befestigt ist, eine innere Trommel (4) mit einer Kontaktfläche, die vorgesehen ist, um mit Bremselementen in Kontakt zu kommen, die aufgrund der Zentrifugalkraftwirkung wirken, einschließlich lösbarer Kopplungsmittel zum Verriegeln/Entriegeln der inneren Trommel (4) in Bezug auf einen stationären Abschnitt, der die innere Trommel (4) außen umgibt, so dass die innere Trommel (4) in einer ersten Betriebsposition einstückig mit einer äußeren Trommel (6) gekoppelt ist, während in einer zweiten Betriebsposition die innere Trommel (4) frei auf ihrer eigenen Welle mittels der Anordnung von Rotationsmitteln rotieren kann, wobei die Kopplungsmittel Betätigungsmittel umfassen, die auf die Kopplungsmittel einwirken, wobei die Kopplungsmittel ein durch die Wirkung der Betätigungsmittel betätigbares Rückhaltesystem zum Arretieren der inneren Trommel (4) umfasst, wobei das Rückhaltesystem einen gezahnten Bereich (8) aufweist, der mit der inneren Trommel (4) verbunden ist, wobei ein gezahnter Abschnitt (90), der mit den Betätigungsmitteln verbunden ist, gekoppelt werden kann, **dadurch gekennzeichnet, dass** das Betätigungsmittel einen lageverstellbaren Stift (9) mit einem gezahnten Abschnitt (90) umfasst, der auf eine lösbare Art mit dem gezahnten Bereich (8) der inneren Trommel (4) gekoppelt werden kann, wobei der Stift (9) in einem Gehäuse aufgenommen ist, das in der äußeren Trommel (6) vorhanden ist, und wobei der Stift zwei Aussparungen umfasst, die entlang seiner Länge vorhanden sind, die konfiguriert sind, um einen zusätzlichen Stift (12) zu koppeln, wobei jede der Aussparungen einer entsprechenden Betriebsposition entspricht.

2. Zentrifugalbremse (1) nach Anspruch 1, **dadurch gekennzeichnet, dass** die Rotationsmittel mindestens ein Lager (7) umfassen, das zwischen dem zentralen Kern (2) und der inneren Trommel (4) angeordnet ist.

3. Zentrifugalbremse (1) nach Anspruch 1, **dadurch gekennzeichnet, dass** der gezahnte Bereich (8) entlang der gesamten Umfangslänge der inneren Trommel (4) angeordnet ist.

4. Zentrifugalbremse (1) nach Anspruch 1, **dadurch gekennzeichnet, dass** die Betätigungsmittel elastische Rückstellmittel umfassen, die sich innerhalb des Gehäuses befinden und auf den Stift (9) einwirken.

5. Zentrifugalbremse (1) nach Anspruch 1, **dadurch gekennzeichnet, dass** die Betätigungsmittel einen zusätzlichen Stift (12) umfassen, der in einem zweiten Gehäuse vorhanden ist, das in der äußeren Trommel (6) ausgebildet ist, und in eine der in dem Stift ausgebildeten Aussparungen einsetzbar ist.

6. Zentrifugalbremse (1) nach Anspruch 5, **dadurch gekennzeichnet, dass** der zusätzliche Stift (12) senkrecht zu einer Längsachse des Stifts (9) angeordnet ist.

7. Zentrifugalbremse (1) nach Anspruch 5, **dadurch gekennzeichnet, dass** elastische Rückstellmittel enthalten sind, die auf den zusätzlichen Stift (12) einwirken.

## Revendications

1. Frein centrifuge détachable (1) pour équipement de levage, comprenant un noyau central (2) relié à un arbre de rotation attaché aux moyens moteurs, un tambour intérieur (4) ayant une surface de contact prévue pour venir en contact avec des éléments de freinage qui agissent sous l'effet de la force centrifuge, incluant des moyens de couplage amovibles pour verrouiller/déverrouiller le tambour interne (4) par rapport à une partie fixe englobant extérieurement le tambour interne (4), de sorte que dans une première position de fonctionnement le tambour intérieur (4) est intégralement couplé à un tambour extérieur (6) tandis que dans une seconde position de fonctionnement le tambour intérieur (4) est libre de tourner sur son propre arbre au moyen de l'agencement de moyens de rotation, dans lequel les moyens de couplage comprennent des moyens d'actionnement qui agissent sur les moyens de couplage, les moyens de couplage comprenant un système de retenue pour verrouiller le tambour intérieur (4), un tel système de retenue pouvant être actionné sous l'effet des moyens d'actionnement, le système de retenue ayant une zone dentée (8) reliée au tambour intérieur (4) dans lequel une zone dentée (90) reliée aux moyens d'actionnement est apte à être couplée, **caractérisé en ce que** le moyen d'actionnement comprend une goupille (9) réglable en position incluant une partie dentée (90) apte à être couplée de manière amovible avec la zone dentée (8) du tambour interne (4), la goupille (9) étant logée dans un logement présent dans le tambour extérieur (6), et dans lequel la goupille comprend deux évidements présents sur la longueur de celle-ci, étant configurée pour se coupler à une goupille supplémentaire (12), dans lequel chacun des évidements correspond à une position de fonctionnement correspondante.

2. Frein centrifuge (1) selon la revendication 1, **caractérisé en ce que** les moyens de rotation comprennent au moins un palier (7) qui est agencé entre le noyau central (2) et le tambour intérieur (4).

3. Frein centrifuge (1) selon la revendication 1, **caractérisé en ce que** la zone dentée (8) est disposée sur toute la longueur périmétrique du tambour intérieur (4).

4. Frein centrifuge (1) selon la revendication 1, **caractérisé en ce que** les moyens d'actionnement comprennent des moyens de rappel élastiques situés à l'intérieur du boîtier, qui agissent sur la goupille (9).

5. Frein centrifuge (1) selon la revendication 1, **caractérisé en ce que** les moyens d'actionnement comprennent une goupille supplémentaire (12) présente dans un second logement réalisé dans le tambour extérieur (6), étant insérable dans l'un des évidements réalisés dans la goupille.

6. Frein centrifuge (1) selon la revendication 5, **caractérisé en ce que** la goupille supplémentaire (12) est disposée perpendiculairement par rapport à un axe longitudinal de la goupille (9).

7. Frein centrifuge (1) selon la revendication 5, **caractérisé en ce que** des moyens de rappel élastiques sont inclus qui agissent sur la goupille supplémentaire (12).
